# EUROPEAN PATENT APPLICATION

(11) **EP 4 286 305 A1**
(43) Date of publication of application: **06.12.2023**
(21) Application number: 22000148.1
(22) Date of filing: 03.06.2022
(51) Int. Cl.: B65G 67/20

(54) **APPARATUS FOR AUTOMATED LOADING OF BUILDING MATERIALS ARRANGED ON PALLETS AND METHOD FOR AUTOMATED LOADING OF BUILDING MATERIALS ARRANGED ON PALLETS**

(71) Applicant: Knauf Gips KG, 97346 Iphofen (DE)
(72) Inventor: Winkler, Thomas, D-97318 Kitzingen (DE)

(57) **Abstract**

The invention relates to an apparatus for automated loading of building materials arranged on pallets comprising a linear moving unit, a robot, a sensor unit and a control unit and relates to a method for automated loading of building materials arranged on pallets.

## Description

The invention relates to an apparatus for automated loading of building materials arranged on pallets and a method for automated loading of building materials arranged on pallets according to the respective independent claim.

To maintain efficient logistics chains, it is particularly important to optimize the time-critical step of loading cargo. Optimization refers to reducing the time required to load the cargo and to automating the loading process as much as possible.

This optimization of the loading process can be particularly well applied to the loading of cargo on standardized pallets. In this context, it is particularly common to require a system and method for loading palletized cargo onto trucks.

As an example, systems and methods are known which use computer-controlled forklifts to load palletized cargo onto trucks. To load the pallets, the forklifts drive to the pallets, pick them up, drive to the truck and load the truck with the pallets. The forklift usually has to drive through a factory hall to pick up the pallets and transport them to the truck.

A particular disadvantage of such systems is that due to a safety-related aspect, the forklift, because it can move without guidance or structural limitations, is only allowed to move very slowly during the entire loading process. This makes the loading process inefficient.

Another example for a system for the loading of cargo on standardized pallets concerns a loading system with rail units for moving the palletized cargo. In such a system, the pallets are arranged in parallel rows, all oriented in the same direction and thus always in the same predefined pattern. For loading, the platform of a truck is positioned at the end of the rails, and the pallets are loaded onto the loading platform of the truck by sliding all pre-arranged pallets with the help of the rail units at once. This method can be fast and safe but does not allow positioning the pallets individually on the loading platform to achieve optimal distribution of the load weight on the axles of the truck or to compensate for incorrect orientation of the loading platform due to incorrect positioning of the truck.

There are loading systems that comprise industrial robots with a manipulator arm being configured for lifting cargo and which allows to load the cargo individually to a pallet. These systems are however not capable to accurately load palletized cargo directly onto the loading platform of a truck. In particular, since the limits and the orientation of loading platforms of different trucks vary.

It is the objective of the present invention to provide an apparatus for automated loading of building materials arranged on pallets and a method for automated loading of building materials arranged on pallets which overcomes or at least reduces the deficiencies in the prior art and, in particular, which allows for a save, fast, accurate and adaptable loading process.

The invention comprises an apparatus for automated loading of building materials arranged on pallets, in particular palletized bagged cargo, onto at least one loading platform of at least one truck comprising:
- a linear moving unit for moving a robot along an x-axis of a reference coordinate system, where the x-axis and y-axis of the reference coordinate system lie within a plane parallel to the at least one loading platform, and where the x-axis, y-axis and z-axis of the reference coordinate system are oriented orthogonal to each other;
- a robot arranged on the linear moving unit for a movement along the x-axis, whereby the robot comprises a manipulator arm with multiple arm sections interlinked with multiple adjustable joints, such that an end arm section of the manipulator arm is movable at least parallel to the y-axis and z-axis of the reference coordinate system, and whereby the robot comprises loading means being arranged at the end arm section for loading the pallets;
- a sensor unit configured to locate at least the spatial limits and orientation of the at least one loading platform;
- a control unit configured to receive data about the spatial limits and orientation of the at least one loading platform from the sensor unit and to control the movement of the robot for collecting building materials arranged on pallets with the loading means and loading the building materials arranged on the pallets onto the at least one loading platform.

By providing an apparatus for automated loading according to the invention that is configured to check the spatial limits and orientation of the at least one loading platform, the building materials arranged on pallets can safely, fast and adaptively moved onto the at least one loading platform. The robot is part of the apparatus further comprising the linear moving unit, the sensor unit and the control unit.

According to a preferred aspect the sensor unit is arranged at the end arm section of the manipulator arm. Being arranged at the end arm section of the manipulator arm the sensor unit can be moved along the at least one loading platform to locate at least the spatial limits and orientation of the at least one loading platform.

According to a particularly preferred aspect the sensor unit is a camera or a radar sensor unit or a lidar sensor unit or a combination thereof.

According to another preferred aspect the control unit is configured to provide at least one loading pattern based on which the movement of the robot is controlled for loading the building materials arranged on the pallets onto the at least one loading platform. A loading pattern specifies the targeted arrangement of the pallets on the loading platform.

According to an advantageous aspect the at least one loading pattern is characterized considering a resulting distribution of axle load on the at least one truck. Preferably, the loading pattern is chosen according to the design and requirements of the truck, i.e. considering spatial limits and/or the geometry of the truck.

According to a particularly advantageous aspect, the apparatus comprises at least one conveyor means that is configured to, preferably continuously, convey the building materials arranged on the pallets to the robot. The conveyor means can be a conveyor belt.

According to another advantageous aspect the at least one conveyor means is configured to, preferably continuously, convey the building materials arranged on the pallets to the robot in such a way, that it takes into account the loading pattern provided by the control unit. For that, the conveyor means can be controlled by the control unit and can be synchronized with the movements of the robot.

According to a preferred aspect the at least one conveyor means is arranged between the robot and the at least one loading platform. This has the advantage, that the robot has to move only a minimum distance for the loading process. Two loading platforms are particularly efficient.

According to another preferred aspect the apparatus comprises a (separate) parking lot for each of the at least one truck. This has the advantage, that the truck with the loading platform is located on a defined area for the loading process.

According to a particularly preferred aspect the loading means are configured as fork for lifting the pallets.

According to an advantageous aspect the end arm section of the manipulator arm is rotatable at least around an axis parallel to the z-axis and/or an axis parallel to the x-axis and/or an axis parallel to the y-axis of the reference coordinate system. This has the advantage that the pallets when being lifted by the robot can be rotated and placed more precisely on the loading platform. That is particularly advantageous in case of the truck comprises posts (corner posts or side posts) for the loading area structure. For example, pallets can be turned by 90° to be oriented in the direction of the loading platform or perpendicular thereto.

According to a particularly advantageous aspect the robot is arranged on the linear moving unit in such a way to be rotatable around an axis parallel to the z-axis about 180°, preferable about 360°. In that way it can turn to a loading platform of a truck that is located on an opposite side.

According to another advantageous aspect a first loading platform of a first truck is arranged on a first parking lot and a second loading platforms of a second truck is arranged on a second parking lot, such that the second loading platform is provided at an opposing side of the first loading platform and the robot. In that way, the robot can first load pallets on the first loading platform and after that continue with loading pallets on the second loading platform just by turning around to it without having to wait for the first truck to leave the first parking lot for that a second truck can park were the first truck has been parking.

The invention relates further to a method for automated loading of building materials arranged on pallets, in particular palletized bagged cargo, onto at least one loading platform comprising the steps:
A) providing at least one loading platform of at least one truck, whereby each of the at least one truck is arranged on a parking lot;
B) providing building materials arranged on pallets, in particular palletized bagged cargo;
C) providing an apparatus for automated loading of the building materials arranged on the pallets, onto the at least one loading platform comprising:
   - a linear moving unit for moving a robot along an x-axis of a reference coordinate system, where the x-axis and y-axis of the reference coordinate system lie within a plane parallel to the at least one loading platform, and where the x-axis, y-axis and z-axis of the reference coordinate system are oriented orthogonal to each other;
   - a robot arranged on the linear moving unit for a movement along the x-axis, whereby the robot comprises a manipulator arm with multiple arm sections interlinked with multiple adjustable joints, such that an end arm section of the manipulator arm is movable at least parallel to the y-axis and z-axis of the reference coordinate system, and whereby the robot comprises loading means being arranged at the end arm section for loading the pallets;
   - a sensor unit configured to at least locate the limits and orientation of the at least one loading platform
   - a control unit configured to receive the spatial limits and orientation of the at least one loading platform from the sensor unit and to control the movement of the robot for collecting building materials arranged on pallets with the loading means and loading the building materials arranged on the pallets onto the at least one loading platform;
D) locating the limits and orientation of the at least one loading platform with the sensor unit and providing them to the control unit;
E) loading up the building materials arranged on pallets by the robot;
F) transporting the building materials arranged on the pallets onto the at least one loading platform by the robot.

Steps E) and F) are repeated until the loading of the building materials onto the loading platform is completed.

By providing a control unit, that is configured to receive data about the spatial limits and orientation of the at least one loading platform from the sensor unit, the control unit can safely, fast and adaptively control the movement of the robot for collecting building materials arranged on pallets and for loading the building materials onto the at least one loading platform.

According to a preferred aspect in step F) the loading of the building materials onto the at least one loading platform is performed according to a loading pattern provided by the control unit.

According to a particularly preferred aspect the loading pattern is characterized in that it takes into account a resulting distribution of axle load on the at least one truck. The loading pattern is chosen according to the design and requirements of the truck.

According to another preferred aspect the loading of the building materials onto the at least one loading platform by the robot preferably performed according to a loading pattern provided by the control unit takes 15 min to 30 min, preferably 6 min to 20 min, more preferably 7 min to 15 min. This has the beneficial effect that the (complete) loading process for one loading platform of a truck is accomplished in a short amount of time.

According to an advantageous aspect the loading of one pallet onto the at least one loading platform by the robot takes on average for the loading of the whole loading platform between 15 sec and 80 sec, preferably 15 sec and 40 sec, most preferably between 15 and 24 sec.

According to another advantageous aspect the apparatus comprises at least one conveyor means that is configured to, preferably continuously, convey the building materials arranged on the pallets to the robot. The conveyor means can be a conveyor belt.

According to a particularly advantageous aspect the at least one conveyor means is configured to, preferably continuously, convey the building materials arranged on the pallets to the robot in such a way, that it takes into account the loading pattern provided by the control unit. For that, the conveyor means can be controlled by the control unit e. g. in its speed and direction and can be synchronized with the movements of the robot.

According to a preferred aspect the at least one conveyor means is arranged between the robot and the at least one loading platform of the at least one truck. This has the advantage that the robot has to move only a minimum distance for the loading process.

According to a particularly preferred aspect step F) is characterized in that the loading of the building materials onto the at least one loading platform is carried out by the robot by adapting to the spatial limits and orientation of the at least one loading platform. For example, if the truck and therefore the loading platform are misoriented by a certain degree on the parking lot the robot will adapt to this misorientation by turning the manipulator arm properly while loading.

According to another preferred aspect the robot is arranged on the linear moving unit in such a way to be rotatable around an axis parallel to the z-axis about 180°, preferable about 360°, and whereby step A) is characterized in that a first loading platform of a first truck arranged on a first parking lot is provided, and that the steps D), E) and F) are performed on the first loading platform, and whereby at the meantime of steps D), E) and F) being performed on the first loading platform a second truck is being arranged on a second parking lot, such that a second loading platform of the second truck is provided at an opposing side of the first loading platform and the robot, and whereby after finishing steps D), E) and F) on the first loading platform steps D), E) and F) are performed on the second loading platform. In that way, the robot can first load pallets on the first loading platform and after that continue with loading pallets on the second loading platform just by turning around to it without having to wait for the first truck to leave the first parking lot, for that a second truck can park where the first truck has been parking.

According to an advantageous aspect the apparatus is an apparatus according to what is specified above. In particular advantageously, the apparatus comprises two conveyor means.

The invention is described in the following in connection to the drawings. In the following:
- **Fig. 1**: is a schematical drawing of an apparatus for automated loading of building materials arranged on pallets in a plan view;
- **Fig. 2**: is a schematical drawing of parts of an apparatus for automated loading of building materials arranged on pallets in a perspective view;
- **Fig. 3**: shows a method for automated loading of building materials arranged on pallets;
- **Fig. 4a** - **4d**: show schematical drawings of loading patterns used by the apparatus for automated loading of building materials arranged on pallets and used in the method for automated loading of building materials arranged on pallets; and
- **Fig. 5**: shows a drawing of a loading facility comprising a pre-loading zone, a loading zone with an apparatus for automated loading of building materials and a post loading zone.

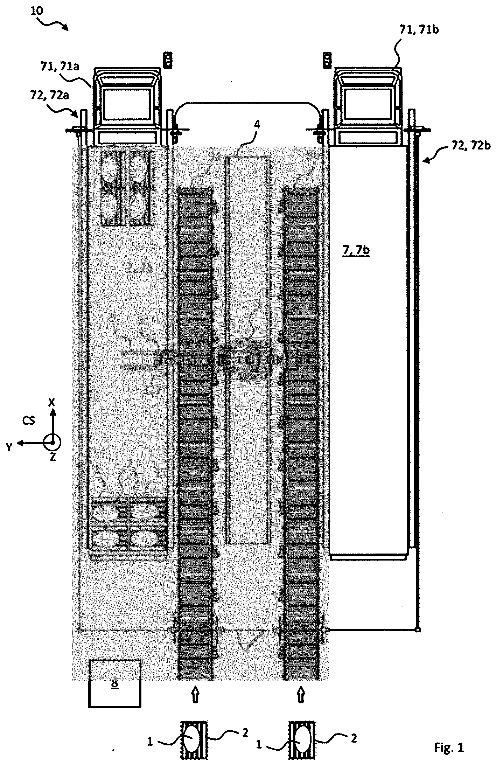

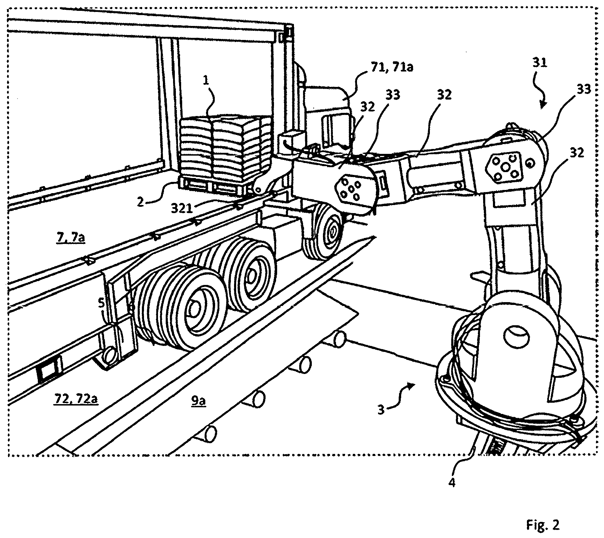

**Fig. 1** shows a schematical drawing of an apparatus 10 for automated loading of building materials 1 arranged on pallets 2 in a plan view and **Fig. 2** shows a schematical drawing of parts of the apparatus 10 for automated loading of building materials 1 arranged on pallets 2 in a perspective view. **Fig. 1** and **Fig. 2** will be described together below to avoid a redundant figure description.

The apparatus 10 is configured for an automated loading of building materials 1 arranged on pallets 2 onto at least one loading platform 7 of at least one truck 71. Building materials 1 arranged on pallets 2 relate in particular to palletized bagged cargo and palletized building boards, but also relate to other building materials 1 arranged on pallets 2.

The apparatus 10 as shown comprises two parking lots 72a, 72b for the two trucks 71a, 72b. The parking lots 72a, 72b serve to locate the respective truck 71a, 71b with the respective loading platform 7a, 7b on a defined area for the loading process.

The first loading platform 7a of the first truck 71a is arranged on the first parking lot 72a and the second loading platform 7b of the second truck 71b is arranged on a second parking lot 72b, such that the second loading platform 7b is provided at an opposing side of the first loading platform 7a and the robot 3. In that way, the robot can first load pallets 2 on the first loading platform 7a and after that continue with loading pallets 2 on the second loading platform 7b just by turning around to it without having to wait for the first truck 71a to leave the first parking lot 72a for that a second truck 72b can park where the first truck 71a has been parking.

The apparatus 10 as shown further comprises a linear moving unit 4 for moving the robot 3 along x-axis X of a reference coordinate system CS, where the x-axis X and y-axis Y of the reference coordinate system CS lie within a plane parallel to the first loading platform 7a of the first truck 71a. The x-axis X, y-axis Y and z-axis Z of the reference coordinate system CS are oriented orthogonal to each other.

The apparatus 10 as shown further comprises a robot 3 arranged on the linear moving unit 4 for a movement along the x-axis X. The robot 3 comprises a manipulator arm 31 with multiple arm sections 32 interlinked with multiple adjustable joints 33, such that an end arm section 321 of the manipulator arm 31 is movable at least parallel to the y-axis Y and z-axis Z of the reference coordinate system CS. The robot 3 comprises a loading means 5 being arranged at the end arm section 321 for loading the pallets 2. The loading means is configured as fork for lifting the pallets 2. The end arm section 321 of the manipulator arm 31 is rotatable around an axis parallel to the z-axis Z. This has the advantage that the pallets 2, when being lifted from the conveyor means 9a by the robot 3, can be rotated and placed more precisely on the loading platforms 7a, 7b. For example, pallets can be turned by 90° to be better fitted side by side on the loading platforms 7a, 7b. In other embodiments the end arm section 321 of the manipulator arm 31 can also be rotatable around an axis parallel to the x-axis X and/or an axis parallel to the y-axis Y of the reference coordinate system CS. Moreover, the robot 3 is arranged on the linear moving unit 4 in such a way to be rotatable around an axis parallel to the z-axis Z about 360°. In that way in can turn from the first loading platform 7a of the first truck 71a to the second loading platform 7b of the second truck 71b that is located on an opposite side, just after the robot has loaded the pallets 2 on the first loading platform 7a. In that way the robot does not have to wait for the first truck 71a to leave the first parking lot 72a for that a second truck 72b can park where the first truck 72a has been parking, but directly continues to load the second truck 72b located on the opposite side.

The apparatus 10 as shown further comprises a sensor unit 6 configured to locate at least the spatial limits and orientation of the loading platforms 7a, 7b. The sensor unit as shown is a camera but can also be a radar sensor unit or a lidar sensor unit or a combination thereof. The sensor unit 6 is arranged at the end arm section 321 of the manipulator arm 31. This has the technical advantage that the sensor unit 6 can be moved along the loading platforms 7a, 7b to locate at least the spatial limits and orientation thereof.

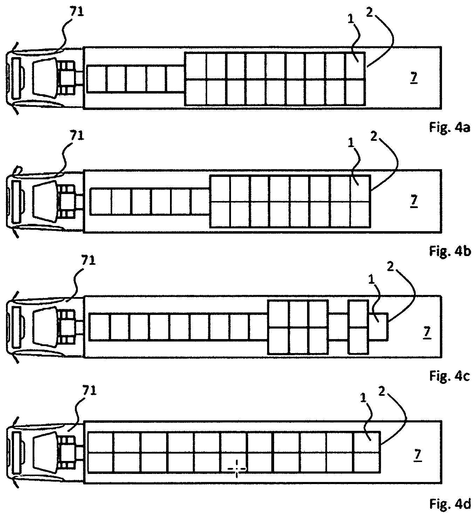

The apparatus 10 as shown further comprises a control unit 8 configured to receive data about the spatial limits and orientation of the loading platforms 7a, 7b from the sensor unit 6 and to control the movement of the robot 3, e.g., by a wireless or wire connection to the robot 3, for collecting building materials 1 arranged on pallets 2 with the loading means 5 and loading the building materials 1 arranged on the pallets 2 onto the loading platforms 7a, 7b. The control unit 8 is configured to provide loading patterns (shown in **Fig. 4****)** based on which the movement of the robot 3 is controlled for loading the building materials 1 arranged on the pallets 2 onto the loading platforms 7a, 7b. A loading pattern specifies the targeted arrangement of the pallets on each of the loading platforms 7a, 7b and is characterized in that it takes into account the resulting distribution of axle load on the respective truck 71a, 71b. Therefore, the loading pattern is chosen according to the design and requirements of the respective truck 71a, 71b to be loaded.

The apparatus 10 as shown further comprises two conveyor means 9a, 9b that are configured to, preferably continuously, convey the building materials 1 arranged on the pallets 2 to the robot 3. Each conveyor means 9a, 9b conveys the building materials 1 arranged on the pallets 2 to the robot 3 in such a way, that it takes into account the loading pattern provided by the control unit 8. For that, the conveyor means 9a, 9b are controlled by the control unit 8, e.g., by a wireless or wire connection to the conveyor means 9a, 9b, and are synchronized with the movements of the robot 3. Each conveyor means 9a, 9b is arranged between the robot 3 and one of the loading platforms 7a, 7b. This has the advantage, that the robot 3 has to move only a minimum distance for the loading process.

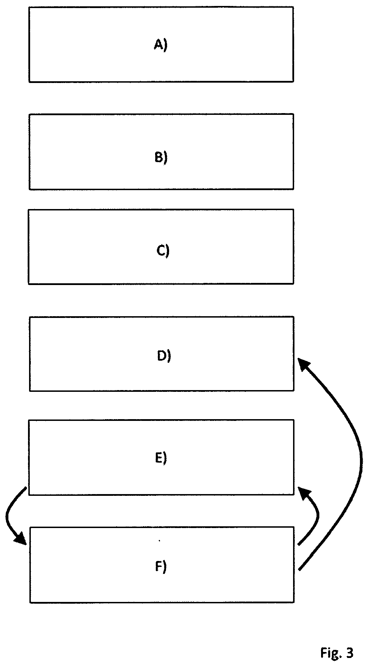

**Fig. 3** shows a method for automated loading of building materials arranged on pallets. Building materials arranged on pallets relate in particular to palletized bagged cargo and palletized building boards, but also relate to other building materials arranged on pallets.

The method comprises the steps:
A) providing at least one loading platform of at least one truck, whereby each of the at least one truck is arranged on a parking lot;
B) providing building materials arranged on pallets, in particular palletized bagged cargo;
C) providing an apparatus for automated loading of the building materials arranged on the pallets, onto the at least one loading platform comprising:
   - a linear moving unit for moving a robot along an x-axis of a reference coordinate system, where the x-axis and y-axis of the reference coordinate system lie within a plane parallel to the at least one loading platform, and where the x-axis, y-axis and z-axis of the reference coordinate system are oriented orthogonal to each other;
   - a robot arranged on the linear moving unit for a movement along the x-axis, whereby the robot comprises a manipulator arm with multiple arm sections interlinked with multiple adjustable joints, such that an end arm section of the manipulator arm is movable at least parallel to the y-axis and z-axis of the reference coordinate system, and whereby the robot comprises loading means being arranged at the end arm section for loading the pallets;
   - a sensor unit configured to at least locate the limits and orientation of the at least one loading platform
   - a control unit configured to receive the spatial limits and orientation of the at least one loading platform from the sensor unit and to control the movement of the robot for collecting building materials arranged on pallets with the loading means and loading the building materials arranged on the pallets onto the at least one loading platform.
D) locating the limits and orientation of the at least one loading platform with the sensor unit and providing them to the control unit;
E) loading up the building materials arranged on pallets by the robot;
F) transporting the building materials arranged on the pallets onto the at least one loading platform by the robot.

Steps E) and F) are repeated until the loading of the building materials onto the loading platform is completed.

In step F) the loading of the building materials onto the at least one loading platform is performed according to a loading pattern provided by the control unit. The loading pattern is characterized in that it takes into account a resulting distribution of axle load on the at least one truck. The loading pattern is chosen according to the design and requirements of the truck.

Step F) is further characterized in that the loading of the building materials onto the at least one loading platform is carried out by the robot while adapting to the spatial limits and orientation of the at least one loading platform. For example, if the truck and therefore the loading platform are misoriented by a certain degree on the parking lot the robot will adapt to this misorientation by turning the manipulator arm properly while loading.

The loading of the building materials onto the at least one loading platform performed according to a loading pattern provided by the control unit takes 15 min to 30 min and the loading of one pallet onto the at least one loading platform by the robot takes between 15 sec and 90 sec.

The apparatus comprises at least one conveyor means that is configured to, preferably continuously, convey the building materials arranged on the pallets to the robot. The at least one conveyor means is configured to, preferably continuously, convey the building materials arranged on the pallets to the robot in such a way, that it takes into account the loading pattern provided by the control unit. For that, the conveyor means is controlled by the control unit and is synchronized with the movements of the robot. The at least one conveyor means is arranged between the robot and the at least one loading platform. Therefore, the robot has to move only a minimum distance for the loading process.

According to a preferred aspect, the robot is arranged on the linear moving unit in such a way to be rotatable around an axis parallel to the z-axis about 180°, preferable about 360°, and whereby step A) is characterized in that a first loading platforms of a first truck arranged on a first parking lot is provided, and that the steps D), E) and F) are performed on the first loading platform, and whereby at the meantime of steps D), E) and F) being performed on the first loading platform a second truck is being arranged on a second parking lot, such that a second loading platform of the second truck is provided at an opposing side of the first loading platform and the robot, and whereby after finishing steps D), E) and F) on the first loading platform steps D), E) and F) are performed on the second loading platform. In that way, the robot can first load pallets on the first loading platform and after that continue with loading pallets on the second loading platform just by turning around to it without having to wait for the first truck to leave the first parking lot for that a second truck can park were the first truck has been parking.

**Fig. 4a** - **4d** show schematical drawings of loading patterns used by the apparatus 10 for automated loading of building materials 1 arranged on pallets 2 and used in the method for automated loading of building materials 1 arranged on pallets 2.

A loading pattern specifies the targeted arrangement of the pallets 2 on the loading platform 7 and is characterized in that it takes into account the resulting distribution of axle load on the truck 71. Therefore, the loading pattern is chosen according to the design and requirements of the truck 71 to be loaded.

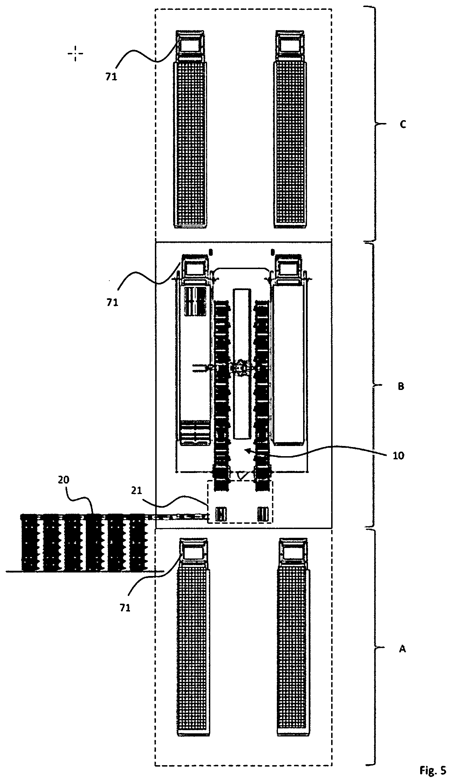

**Fig. 5** shows a drawing of a loading facility comprising a pre-loading zone A, a loading zone B with an apparatus 10 for automated loading of building materials and a post loading zone C. In the pre-loading zone the truck 71 is parked and the loading platform is opened by opening of the truck tarpaulins. Then the trucks are moved preferably as shown in the drawing in parallel lines to the respective parking lot in the loading zone B. After loading up the of building materials, the truck is moved to the post loading zone C and the truck tarpaulins are closed and the truck is prepared to leave the facility.

The reference 20 denotes a pallets storing unit which stores and provides the pallets to the apparatus 10 in the loading zone B all automatic. The pallets storing unit 20 can be arranged above the area which accommodates the apparatus 10. A pallet elevator 21 transports the pallets from the higher level of the pallets storing unit 20 to the apparatus 10 to achieve the all automatic handling of the pallets.

### Reference List

building materials 1
apparatus 10
pallets 2
robot 3
manipulator arm 31
multiple arm sections 32
end arm section 321
adjustable joints 33
linear moving unit 4
loading means 5
sensor unit 6
loading platforms 7a, 7b
truck 71a, 71b
parking lot 72
first parking lot 72a
second parking lot 72b
control unit 8
conveyor means 9a, 9b
pallets storing unit 20
pallet elevator 21
pre-loading zone A
loading zone B
post loading zone C

## Claims

1. Apparatus (10) for automated loading of building materials (1) arranged on pallets (2), in particular palletized bagged cargo, onto at least one loading platform (7) of at least one truck (71) comprising:
• a linear moving unit (4) for moving a robot (3) along an x-axis (X) of a reference coordinate system (CS), where the x-axis (X) and y-axis of the reference coordinate system (CS) lie within a plane parallel to the at least one loading platform (7), and where the x-axis (X), y-axis (Y) and z-axis (Z) of the reference coordinate system (CS) are oriented orthogonal to each other;
• a robot (3) arranged on the linear moving unit (4) for a movement along the x-axis (X), whereby the robot (3) comprises a manipulator arm (31) with multiple arm sections (32) interlinked with multiple adjustable joints (33), such that an end arm section (321) of the manipulator arm (31) is movable at least parallel to the y-axis (Y) and z-axis (Z) of the reference coordinate system (CS), and whereby the robot (3) comprises loading means (5) being arranged at the end arm section (321) for loading the pallets (2);
• a sensor unit (6) configured to locate at least the spatial limits and orientation of the at least one loading platform (7);
• a control unit (8) configured to receive data about the spatial limits and orientation of the at least one loading platform (7) from the sensor unit (6) and to control the movement of the robot (3) for collecting building materials (1) arranged on pallets (2) with the loading means (5) and loading the building materials (1) arranged on the pallets (2) onto the at least one loading platform (7).

2. Apparatus (10) according to claim 1, whereby the sensor unit (6) is arranged at the end arm section (321) of the manipulator arm (31).

3. Apparatus (10) according to anyone of the preceding claims, whereby the control unit (8) is configured to provide at least one loading pattern based on which the movement of the robot (3) is controlled for loading the building materials (1) arranged on the pallets (2) onto the at least one loading platform (7).

4. Apparatus (10) according to claim 3, whereby the at least one loading pattern is **characterized in** considering a resulting distribution of axle load on the at least one truck (71).

5. Apparatus (10) according to anyone of the preceding claims, whereby the apparatus (10) comprises at least one conveyor means (9) that is configured to, preferably continuously, convey the building materials (1) arranged on the pallets (2) to the robot (3).

6. Apparatus (10) according to claim 5 and anyone of claims 2 to 4, whereby the at least one conveyor means (9) is configured to, preferably continuously, convey the building materials (1) arranged on the pallets (2) to the robot (3) in such a way, that it takes into account the loading pattern provided by the control unit (8).

7. Apparatus (10) according to anyone of the preceding claims, whereby the end arm section (321) of the manipulator arm (31) is rotatable at least around an axis parallel to the z-axis (Z) and/or an axis parallel to the x-axis (X) and/or an axis parallel to the y-axis (Y) of the reference coordinate system (CS).

8. Apparatus (10) according to anyone of the preceding claims, whereby the robot (3) is arranged on the linear moving unit (4) in such a way to be rotatable around an axis parallel to the z-axis (Z) about 180°, preferably about 360°.

9. Apparatus (10) according to claim 8, whereby a first loading platform (7a) of a first truck (71a) is arranged on a first parking lot (72a) and a second loading platform (7b) of a second truck (71b) is arranged on a second parking lot (72b), such that the second loading platform (7b) is provided at an opposing side of the first loading platform (7a) and the robot (3), preferably parallel to the x-axis.

10. Method for automated loading of building materials (1) arranged on pallets (2), in particular palletized bagged cargo, onto at least one loading platform (7) comprising the steps:
A) providing at least one loading platform (7) of at least one truck (71), whereby each of the at least one truck (71) is arranged on a parking lot (72);
B) providing building materials (1) arranged on pallets (2), in particular palletized bagged cargo;
C) providing an apparatus (10) for automated loading of the building materials (1) arranged on the pallets (2), onto the at least one loading platform (7) comprising:
• a linear moving unit (4) for moving a robot (3) along an x-axis (X) of a reference coordinate system (CS), where the x-axis (X) and y-axis of the reference coordinate system (CS) lie within a plane parallel to the at least one loading platform (7), and where the x-axis (X), y-axis (Y) and z-axis (Z) of the reference coordinate system (CS) are oriented orthogonal to each other;
• a robot (3) arranged on the linear moving unit (4) for a movement along the x-axis (X), whereby the robot (3) comprises a manipulator arm (31) with multiple arm sections (32) interlinked with multiple adjustable joints (33), such that an end arm section (321) of the manipulator arm (31) is movable at least parallel to the y-axis (Y) and z-axis (Z) of the reference coordinate system (CS), and whereby the robot (3) comprises loading means (5) being arranged at the end arm section (321) for loading the pallets (2);
• a sensor unit (6) configured to at least locate the limits and orientation of the at least one loading platform (7)
• a control unit (8) configured to receive data about the spatial limits and orientation of the at least one loading platform (7) from the sensor unit (6) and to control the movement of the robot (3) for collecting building materials (1) arranged on pallets (2) with the loading means (5) and loading the building materials (1) arranged on the pallets (2) onto the at least one loading platform (7);
D) locating the limits and orientation of the at least one loading platform (7) with the sensor unit (6) and providing them to the control unit (8);
E) loading up the building materials (1) arranged on pallets (2) by the robot (3);
F) transporting the building materials (1) arranged on the pallets (2) onto the at least one loading platform (7) by the robot (3).

11. Method according to claim 14, whereby in step F) the loading of the building materials (1) onto one of the at least one loading platform (7) is performed according to a loading pattern provided by the control unit (8).

12. Method according to claim 15, whereby the loading pattern is **characterized in that** it takes into account a resulting distribution of axle load on the at least one truck (71).

13. Method according to claim 15 or 16, whereby the loading of the building materials (1) onto the at least one loading platform (7) by the robot (3) preferably performed according to a loading pattern provided by the control unit (8) takes 15 min to 30 min, preferably 6 min to 20 min, more preferably 7 min to 15 min.

14. Method according to anyone of the preceding claims, whereby the loading of one pallet (2) onto the at least one loading platform (7) by the robot (3) takes between 15 sec and 80 sec, preferably 15 sec and 40 sec, more preferably 15 sec to 24 sec.

15. Method according to anyone of the preceding claim, whereby the apparatus (10) comprises at least one conveyor means (9) that is configured to, preferably continuously, convey the building materials (1) arranged on the pallets (2) to the robot (3).

16. Method according to claim 19 and anyone of claims 15 to 17, whereby the at least one conveyor means (9) is configured to, preferably continuously, convey the building materials (1) arranged on the pallets (2) to the robot (3) in such a way, that it takes into account the loading pattern provided by the control unit (8).

17. Method (10) according to claim 15 or 16, whereby the at least one conveyor means (9) is arranged between the robot (3) and the at least one loading platform (7).

18. Method according to anyone of the preceding claims, whereby step F) is **characterized in that** the loading of the building materials (1) onto the at least one loading platform (7) is carried out by the robot (3) by adapting to the spatial limits and orientation of the at least one loading platform (7).

19. Method according to anyone of the preceding claims, whereby the robot (3) is arranged on the linear moving unit (4) in such a way to be rotatable around an axis parallel to the z-axis (Z) about 180°, preferably about 360°, and whereby in step A) a first loading platform (7a) of a first truck (71a) arranged on a first parking lot (72a) is provided, and that the steps D), E) and F) are performed on the first loading platform (7a), and whereby in the meantime of steps D), E) and F) being performed on the first loading platform (7a), a second truck (71b) is being arranged on a second parking lot (72b), such that a second loading platform (7b) of the second truck (71b) is provided at an opposing side of the first loading platform (72a) and the robot (3), and whereby after finishing steps D), E) and F) on the first loading platform steps D), E) and F) are performed on the second loading platform (7b).

20. Method according to anyone of the preceding claims, whereby the apparatus (10) is an apparatus (10) according to anyone of the claims 1 to 13.
